# EUROPEAN PATENT APPLICATION

(11) **EP 4 454 836 A1**
(43) Date of publication of application: **30.10.2024**
(21) Application number: 22910728.9
(22) Date of filing: 24.11.2022
(51) Int. Cl.: B25J 15/08

(54) **SAMPLE SORTING SYSTEM**

(30) Priority: 21.12.2021 JP 2021207194
(71) Applicant: HITACHI HIGH-TECH CORPORATION, Tokyo 105-6409 (JP)
(72) Inventor: YANG, Jaesung, Tokyo 100-8280 (JP); SEKIYA, Kento, Tokyo 100-8280 (JP)
(74) Representative: MERH-IP Matias Erny Reichl Hoffmann Patentanwälte PartG mbB
(86) International application number: PCT/JP2022/043323
(87) International publication number: WO 2023/120010

(57) **Abstract**

The present invention provides a sample sorting system comprising a gripping hand capable of stably gripping a plurality of objects simultaneously. This sample sorting system comprises: a gripping device (107) having a gripping hand (100); and a control device (104) which controls the gripping device (107). The gripping hand (100) has a plurality of fingers including a first finger (400) and a second finger (401), and grips a plurality of objects (105) with the plurality of fingers. The first finger (400) has a plurality of recess sections (404) in the longitudinal direction of the first finger (400) at positions facing the second finger (401). The second finger (401) has an oblique surface (405) in the longitudinal direction of the second finger (401) at a position facing the first finger (400).

## Description

### Technical Field

The present invention relates to a sample sorting system including a gripping device that can simultaneously grip a plurality of objects.

### Background Art

In a medical laboratory or the like, a sample sorting system including a gripping device is used for sorting samples (for example, test tubes). The gripping device includes a gripping hand having a finger for gripping an object such as a sample, and grips the object with the finger of the gripping hand.

Examples of a device for gripping a plurality of objects with a gripping hand in related art are disclosed in PTL 1 and PTL 2.

PTL 1 discloses a twin gripper for simultaneously gripping two rounded material portions. In the twin gripper disclosed in PTL 1, a first bearing unit and a second bearing unit are connected at a fixed position, a first additional bearing unit and a second additional bearing unit are elastically connected, and the two bearing units can be displaced forward and backward in a displacement direction in relation to the two additional bearing units.

PTL 2 discloses a gripping device for a long member, which can grip a plurality of pipes. The gripping device disclosed in PTL 2 includes a gripping mechanism including a first pressing member having an arched recess section at a lower portion thereof, and a lifting mechanism including a second pressing member having an arched protrusion section at an upper portion thereof. The gripping mechanism and the lifting mechanism are disposed in at least two sets along a longitudinal direction of the long member, and a plurality of long objects are pinched by the recess section of the first pressing member and the protrusion section of the second pressing member.

### Citation List

### Patent Literature

PTL 1: JP2016-538141A
PTL 2: JP2001-047388A

### Summary of Invention

### Technical Problem

A sample sorting system is required to perform an operation of gripping samples placed in a disorganized manner and providing the gripped samples at a specific location with high reliability and high throughput. Therefore, it is desirable that a gripping hand can stably grip a plurality of objects (samples) placed on a flat surface simultaneously. However, in the devices in the related art, there is a problem that, even though a plurality of objects placed on a flat surface are simultaneously gripped, for example, gripping of the objects is not stable since a finger of a gripping hand cannot be sufficiently in contact with the plurality of objects.

An object of the present invention is to provide a sample sorting system including a gripping hand that can stably grip a plurality of objects simultaneously.

### Solution to Problem

A sample sorting system according to the present invention includes a gripping device including a gripping hand, and a control device that controls the gripping device. The gripping hand has a plurality of fingers including a first finger and a second finger, and grips a plurality of objects with the plurality of fingers. The first finger has a plurality of recess sections along a longitudinal direction of the first finger at positions facing the second finger. The second finger has an oblique surface along a longitudinal direction of the second finger at a position facing the first finger.

### Advantageous Effects of Invention

According to the present invention, it is possible to provide a sample sorting system including a gripping hand that can stably grip a plurality of objects simultaneously.

### Brief Description of Drawings

[FIG. 1] FIG. 1 shows an example of a configuration of a sample sorting system according to a first embodiment of the present invention.
[FIG. 2] FIG. 2 shows an example of a configuration of a control device of the sample sorting system.
[FIG. 3] FIG. 3 is a flowchart showing an example of processing executed by the control device.
[FIG. 4] FIG. 4 shows an example of a configuration of a gripping hand provided in a gripping device in the first embodiment.
[FIG. 5] FIG. 5 shows a state in which the gripping hand provides a plurality of gripped samples on a sample rack.
[FIG. 6A] FIG. 6A shows an example of a configuration of a gripping hand provided in a gripping device in a second embodiment.
[FIG. 6B] FIG. 6B shows an example of a configuration of the gripping hand whose rotation portion is connected to a first finger by an elastic member.
[FIG. 7] FIG. 7 shows an example of a configuration of a gripping hand provided in a gripping device in a third embodiment.
[FIG. 8] FIG. 8 is a schematic diagram of fingers of a gripping hand of a sample sorting system according to a fifth embodiment as viewed from above a flat surface where samples are placed.
[FIG. 9] FIG. 9 is a schematic diagram of a configuration in which the gripping hand includes two finger groups in the sample sorting system according to the fifth embodiment as viewed from above the flat surface where the samples are placed.
[FIG. 10] FIG. 10 shows an example of a recess section of a first finger having a shape formed by a plurality of flat surfaces.
[FIG. 11] FIG. 11 shows a second finger whose oblique surface is a curved surface.

### Description of Embodiments

A sample sorting system according to the present invention includes a gripping hand that grips a plurality of objects, and can be used for, for example, sorting samples (for example, test tubes) in a medical laboratory. The gripping hand has a plurality of fingers, and at least two of the plurality of fingers have different shapes. Specifically, one of the plurality of fingers has a plurality of recess sections along a longitudinal direction of the finger, and another one finger has an oblique surface along the longitudinal direction of the finger. The gripping hand can simultaneously grip, using the oblique surface of the finger, a plurality of objects aligned along the longitudinal direction of the finger. A part of the plurality of gripped objects enters each recess section of the finger. Therefore, the gripping hand can stably grip the plurality of objects simultaneously. The gripping hand can grip a cylindrical or spherical object.

Hereinafter, a sample sorting system according to an embodiment of the present invention will be described with reference to the drawings. However, the present invention is not to be construed as being limited to the description of the following embodiment. Specific configurations described in the embodiment can be changed as desired without departing from the spirit and scope of the present invention.

In the drawings used in the present specification, the same or corresponding components are denoted by the same reference numerals, and repeated description of these components may be omitted.

Notations of "first", "second", "third", and the like in the present specification and the like are used to identify the components, and the numbers and the order are not necessarily limited.

### First Embodiment

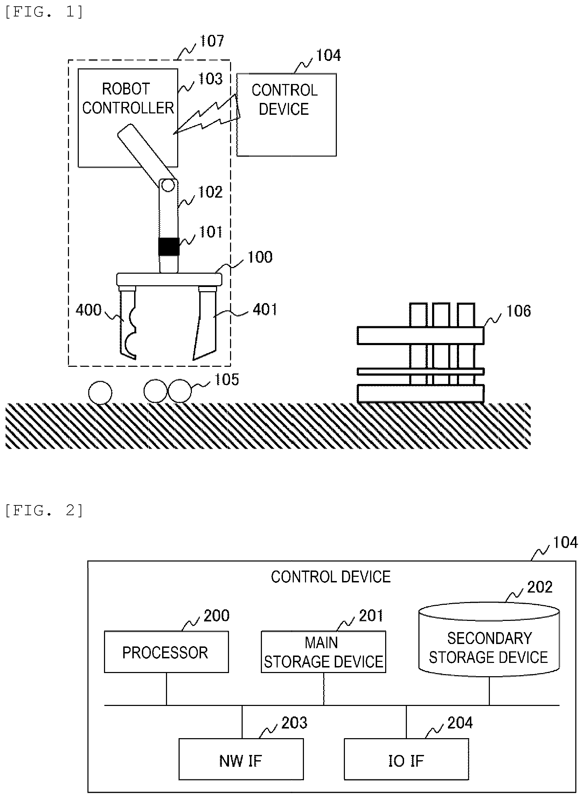

FIG. 1 shows an example of a configuration of a sample sorting system according to a first embodiment of the present invention. The sample sorting system according to the present embodiment includes a gripping device 107 and a control device 104. The gripping device 107 and the control device 104 can communicate with each other via a network. Any network such as a wide area network (WAN) or a local area network (LAN) can be used as the network.

The gripping device 107 is a robot that grips a plurality of objects and provides the gripped objects at a specific location. For example, the gripping device 107 grips a plurality of samples 105 in a workspace such as a medical laboratory and provides the gripped samples 105 on a sample rack 106. Hereinafter, an example in which each object gripped by the gripping device 107 is a cylindrical sample 105 will be described.

In the present embodiment, the gripping device 107 can simultaneously grip two samples 105 on a flat surface.

The gripping device 107 includes a robot controller 103, an object information acquisition device 101, a manipulator 102, and a gripping hand 100.

The robot controller 103 controls the entire gripping device 107 such as the object information acquisition device 101, the manipulator 102, and the gripping hand 100 based on control information received from the control device 104.

The object information acquisition device 101 acquires object information indicating a state of the plurality of samples 105 from the workspace of the gripping device 107. The object information acquisition device 101 may include, for example, a camera that acquires an image. The object information includes data related to a size, a shape, a posture, and a position of each sample 105.

The gripping device 107 may include a plurality of object information acquisition devices 101 that acquire the same type of object information, or may include a plurality of object information acquisition devices 101 that acquire different types of object information.

The manipulator 102 includes a link and a joint, and moves the gripping hand 100 by the link. The manipulator 102 further includes a driving device (not shown) for moving the link in a predetermined direction with the joint serving as a fulcrum.

The gripping hand 100 includes a plurality of fingers (for example, a first finger 400 and a second finger 401 to be described later), and grips one or more objects (samples 105). The plurality of fingers constitute one set of fingers. The gripping hand 100 can grip a plurality of samples 105 with the one set of fingers. The gripping hand 100 grips the samples 105 by closing the one set of fingers, and releases the gripped samples 105 by opening the one set of fingers. Hereinafter, a direction in which the fingers open or close is referred to as an "opening and closing direction". The gripping hand 100 further includes a driving device (not shown) that opens and closes the fingers. The driving device moves the fingers of the gripping hand 100 in the opening and closing direction. The gripping hand 100 may include a sensor such as a force sensor or a tactile sensor.

The gripping device 107 may include a plurality of devices of the same type as the manipulator 102 and the gripping hand 100.

The control device 104 controls the gripping device 107. The control device 104 acquires various types of information from the gripping device 107, generates the control information for controlling the gripping device 107, and transmits the generated control information to the gripping device 107.

FIG. 2 shows an example of a configuration of the control device 104. The control device 104 includes a processor 200, a main storage device 201, a secondary storage device 202, a network interface (NW IF) 203, and an input and output interface (IO IF) 204. These components are connected to one another via an internal bus.

The hardware configuration of the control device 104 shown in FIG. 2 is an example, and the hardware configuration of the control device 104 is not limited thereto. For example, the control device 104 may include hardware that is not shown or may not include a part of the hardware such as the secondary storage device 202 and the input and output interface 204.

The processor 200 executes a program stored in the main storage device 201. The processor 200 operates as a functional unit (module) that implements a specific function by executing processing according to the program.

The main storage device 201 may be a storage device such as a dynamic random access memory (DRAM), and stores a program to be executed by the processor 200 and information used by the program. The main storage device 201 is also used as a work area used by the program.

The program and the information may be stored in a device or an apparatus, such as the secondary storage device 202, other than the main storage device 201. In this case, the processor 200 reads the program and the information from the device or the apparatus, and stores the program and the information in the main storage device 201.

The secondary storage device 202 may include a storage device such as a hard disk drive (HDD) or a solid state drive (SSD), and permanently stores data.

The network interface 203 is an interface for the control device 104 to communicate with an external device such as the gripping device 107 via a network.

The input and output interface 204 is an interface for the control device 104 to connect to an input device, an output device, and the like. The input device may include a keyboard, a mouse, and a touch panel, and the output device may include a display and a printer.

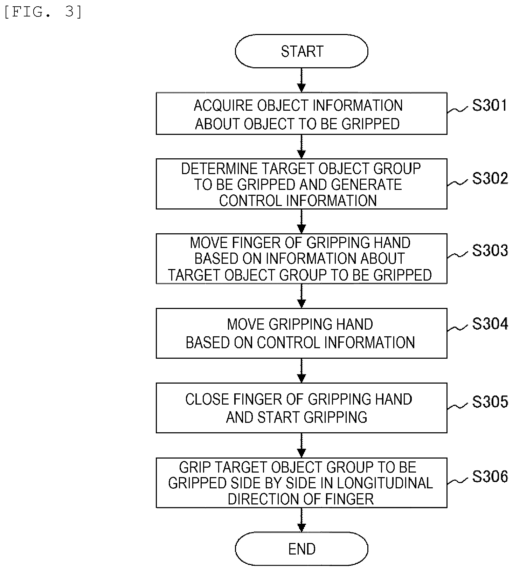

FIG. 3 is a flowchart showing an example of processing executed by the control device 104.

In step S301, the control device 104 acquires, from the gripping device 107, the object information about objects to be gripped in the workspace. The objects to be gripped are a plurality of samples 105. A range in which the object information is acquired in the workspace may be determined by a user who operates the control device 104 or may be determined by the robot controller 103 of the gripping device 107.

In step S302, the control device 104 determines the plurality of samples 105 to be gripped based on the acquired object information, calculates a gripping position for gripping the plurality of samples 105, and generates a trajectory plan toward the gripping position. The trajectory plan toward the gripping position is the control information for controlling the gripping device 107.

For example, the control device 104 can determine the plurality of samples 105 to be simultaneously gripped based on a relative position of the plurality of samples 105. For example, the control device 104 can calculate, by obtaining center positions of the plurality of samples 105 based on a shape and a position of each sample 105, the gripping position where the plurality of samples 105 can be simultaneously gripped. The trajectory plan toward the gripping position is information about a trajectory of movement of the manipulator 102 and the gripping device 107 for moving the gripping hand 100 to the gripping position. The control device 104 may generate the trajectory plan using a known method.

The plurality of samples 105 to be gripped determined in step S302 are a plurality of samples 105 that are targets to be gripped, and are referred to as a target sample group to be gripped or a target object group to be gripped.

In step S303, the control device 104 determines an opening distance of the fingers of the gripping hand 100 based on information about the target sample group to be gripped, and moves the fingers in an opening direction by the determined distance.

In step S304, the control device 104 moves the gripping hand 100 to the gripping position based on the control information (the trajectory plan toward the gripping position) generated in step S302.

In step S305, the control device 104 moves the fingers of the gripping hand 100 in a closing direction. Then, the gripping hand 100 starts gripping the target sample group to be gripped. The control device 104 determines a closing distance of the fingers of the gripping hand 100 based on the information about the target sample group to be gripped and moves the fingers in the closing direction by the determined distance.

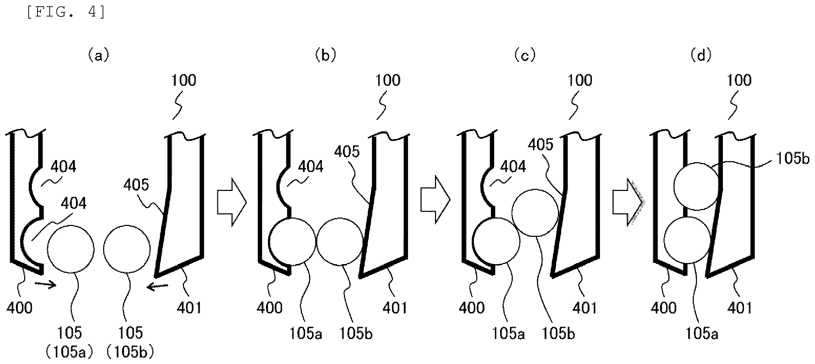

In step S306, the gripping hand 100 grips the target sample group to be gripped. In the present embodiment, the target sample group to be gripped is two samples 105. In the present embodiment, according to the configuration of the fingers of the gripping hand 100 described with reference to FIG. 4, the two samples 105 are gripped side by side along the longitudinal direction of the finger by moving one sample 105 in the longitudinal direction of the finger by a gripping operation.

FIG. 4 shows an example of a configuration of the gripping hand 100 provided in the gripping device 107 in the present embodiment. FIG. 4 shows four states (a) to (d) representing the gripping operation of the gripping hand 100 in time series. The gripping operation of the gripping hand 100 proceeds in an order of the states (a) to (d).

The gripping hand 100 has the first finger 400 and the second finger 401 as one set of fingers for gripping a plurality of cylindrical objects. In the present embodiment, the objects gripped by the gripping hand 100 are a plurality of samples 105 (105a and 105b). The first finger 400 and the second finger 401 face each other. It is assumed that the first finger 400 is located at a position contactable with the sample 105a, and the second finger 401 is located at a position contactable with the sample 105b.

The first finger 400 has a plurality of recess sections 404 along the longitudinal direction of the finger at positions facing the second finger 401. A shape of each recess section 404 is an arc shape along a part of a contour of the target sample 105 to be gripped. In the present embodiment, since the gripping hand 100 grips the two samples 105a and 105b, the number of the recess sections 404 is two. That is, the first finger 400 has a recess section 404 on a tip end side and a recess section 404 on a base portion side.

On each of the first finger 400 and the second finger 401, a lower portion in FIG. 4 is a tip end, and an upper portion in FIG. 4 is a base portion.

The second finger 401 has an oblique surface 405 along the longitudinal direction of the finger at a position facing the first finger 400. The oblique surface 405 is a flat surface, and has a shape moving away from the first finger 400 as the oblique surface 405 extends from the tip end toward the base portion of the second finger 401. That is, the second finger 401 becomes thinner from the tip end toward the base portion due to the oblique surface 405.

The state (a) in FIG. 4 shows a state in which the gripping hand 100 starts closing the first finger 400 and the second finger 401 while simultaneously gripping the two samples 105a and 105b on a flat surface. In FIG. 4, a left-right direction is the opening and closing direction.

The state (b) in FIG. 4 shows a state in which the first finger 400 and the second finger 401 are closed, the first finger 400 is in contact with one sample 105a, and the second finger 401 is in contact with the other sample 105b. A part of the sample 105a enters the recess section 404 on the tip end side of the first finger 400 among the two recess sections 404 of the first finger 400. The sample 105b is in contact with the oblique surface 405 of the second finger 401.

The state (c) in FIG. 4 shows a state in which the first finger 400 and the second finger 401 are further closed from the state (b), and the sample 105b moves toward the base portion of the second finger 401 along the oblique surface 405 of the second finger 401. The sample 105b moves toward the base portion of the second finger 401 due to a gripping force of the gripping hand 100 (a pressing force of the second finger 401) and an action of the oblique surface 405 of the second finger 401.

The state (d) in FIG. 4 shows a state in which the closing of the first finger 400 and the second finger 401 is completed, and the gripping operation of the gripping hand 100 is completed. When the first finger 400 and the second finger 401 are further closed from the state (c), the sample 105b further moves toward the base portion of the second finger 401 along the oblique surface 405 of the second finger 401, and a part of the object 105b enters the recess section 404 on the base portion side of the first finger 400 among the two recess sections 404 of the first finger 400.

In this way, the gripping hand 100 can simultaneously grip the two samples 105 side by side along the longitudinal direction of the first finger 400 and the second finger 401. When the two samples 105 are gripped, a part thereof enters the recess section 404. Therefore, the gripping hand 100 can stably grip the two samples 105 simultaneously.

The gripping hand 100 provides the plurality of samples 105 gripped by the first finger 400 and the second finger 401 on the sample rack 106. In the present embodiment, the two samples 105 gripped by the gripping hand 100 enter the two recess sections 404 of the first finger 400. An interval between the two recess sections 404 in the longitudinal direction of the first finger 400 is preferably equal to an interval between the samples 105 adjacent to each other on the sample rack 106.

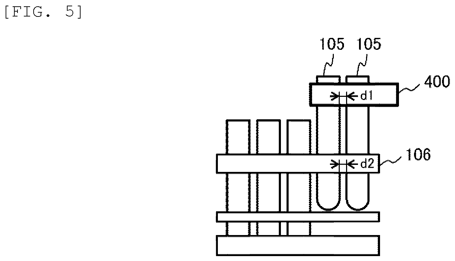

FIG. 5 shows a state in which the gripping hand 100 provides the plurality of gripped samples 105 on the sample rack 106. The gripping hand 100 provides the two samples 105 gripped by the first finger 400 and the second finger 401 on the sample rack 106.

When an interval d1 between the two recess sections 404 of the first finger 400 in the longitudinal direction of the first finger 400 is equal to an interval d2 between the samples 105 disposed adjacent to each other on the sample rack 106, the gripping hand 100 can provide the two gripped samples 105 on the sample rack 106 while gripping the samples 105 without changing postures and positions thereof. Therefore, when the interval d1 is equal to the interval d2, efficiency of gripping the samples 105 and providing the samples 105 on the sample rack 106 by the gripping device 107 can be further improved.

In the above description, the recess section 404 of the first finger 400 has an arc shape. The shape of the recess section 404 may be any shape as long as a part of the sample 105 can enter the recess section 404 when the gripping hand 100 grips the sample 105. For example, the shape of the recess section 404 of the first finger 400 may be a shape formed by a plurality of flat surfaces.

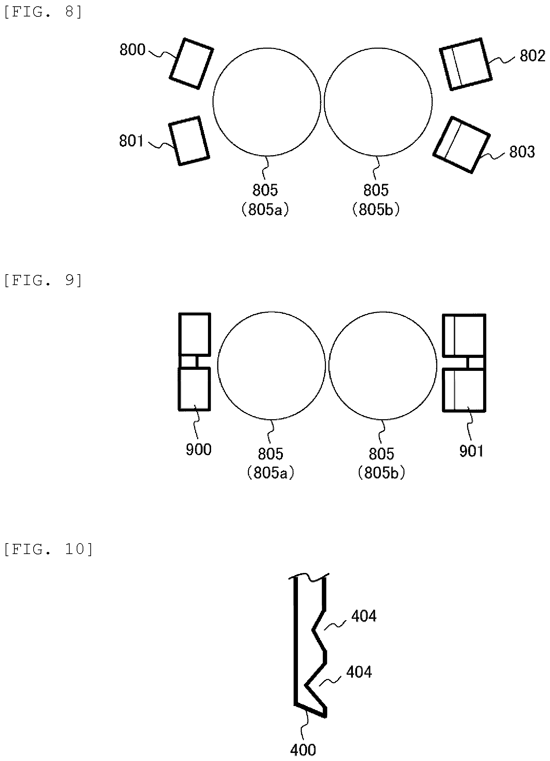

FIG. 10 shows an example of the recess section 404 of the first finger 400 having a shape formed by a plurality of flat surfaces. FIG. 10 shows an example in which the recess section 404 has a shape formed by two flat surfaces.

The recess section 404 of the first finger 400 preferably includes a soft member. The soft member is a member softer than a portion of the first finger 400 other than the soft member, and can be made of a flexible material or an elastic material. When the recess section 404 includes the soft member, the gripping hand 100 can grip the sample 105 more stably.

In the above description, the oblique surface 405 of the second finger 401 is a flat surface. The oblique surface 405 may be a curved surface. For example, the oblique surface 405 may be a curved surface recessed toward the outside of the fingers in the opening and closing direction of the fingers of the gripping hand 100.

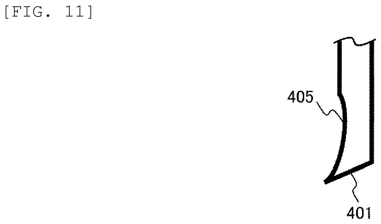

FIG. 11 shows the second finger 401 whose oblique surface 405 is a curved surface. FIG. 11 shows an example in which the oblique surface 405 of the second finger 401 is a curved surface recessed toward the outside of the fingers in the opening and closing direction of the fingers of the gripping hand 100.

The oblique surface 405 of the second finger 401 is preferably made of an easily slidable member. The easily slidable member is a member having a smaller friction (a smaller friction coefficient) than a portion of the second finger 401 other than the easily slidable member. When the oblique surface 405 is formed of the easily slidable member, movement of the sample 105 along the oblique surface 405 (the state (c) in FIG. 4) is easier, and the gripping hand 100 can grip the sample 105 more stably.

In the gripping operation of the gripping hand 100, even when the fingers of the gripping hand 100 are closed, the fingers may not be closed by a distance determined by the control device 104 (that is, one or both of the first finger 400 and the second finger 401 may not be moved by a specified distance). In this case, in the gripping operation, the closing of the fingers of the gripping hand 100 is stopped halfway (for example, the gripping operation is stopped in the state (b) in FIG. 4). The sample sorting system according to the present embodiment can cope with such a case as follows.

The object information acquisition device 101 can also acquire positions of the first finger 400 and the second finger 401. The control device 104 acquires the positions of the first finger 400 and the second finger 401 acquired by the object information acquisition device 101 from the gripping device 107. Even if the fingers of the gripping hand 100 are closed, when the fingers are not closed by the determined distance, the control device 104 opens the fingers of the gripping hand 100 and closes the fingers of the gripping hand 100 again to perform the gripping operation. When the fingers of the gripping hand 100 are not closed by the determined distance even though the fingers are closed, the control device 104 slightly opens the fingers of the gripping hand 100, slightly moves the gripping hand 100 to change a position of the gripping hand 100, and then performs the gripping operation again.

In the above description, the number of the recess sections 404 of the first finger 400 is two, and the gripping hand 100 grips two samples 105 simultaneously. The number of the recess sections 404 may be three or more such that the gripping hand 100 can simultaneously grip three or more samples 105. However, in the configuration of the gripping hand 100 in the present embodiment, in order to more stably grip the plurality of samples 105 simultaneously, the number of the recess sections 404 is preferably two.

As described above, the sample sorting system according to the present embodiment includes the gripping hand 100 that can stably grip the plurality of objects (samples 105) simultaneously.

### Second Embodiment

A sample sorting system according to a second embodiment of the present invention will be described. Hereinafter, the sample sorting system according to the present embodiment will be described focusing on differences from the sample sorting system according to the first embodiment. In the present embodiment, the gripping device 107 can simultaneously grip three samples 105 on a flat surface. Hereinafter, an example in which each object gripped by the gripping device 107 is a cylindrical sample 105 will be described.

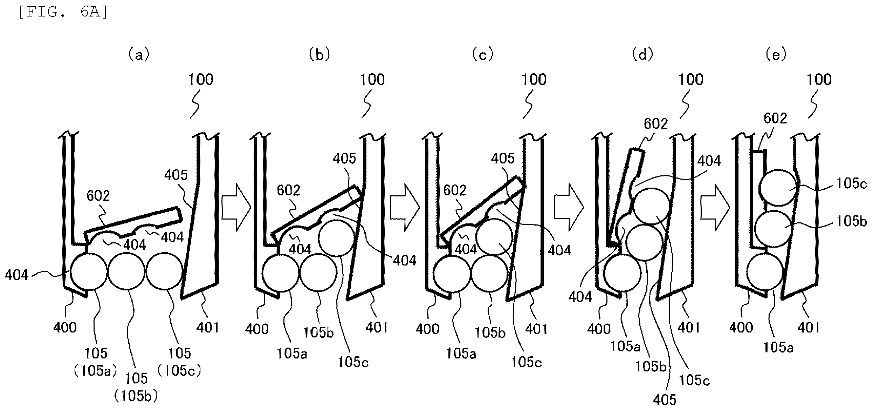

FIG. 6A shows an example of a configuration of the gripping hand 100 provided in the gripping device 107 in the present embodiment. FIG. 6A shows five states (a) to (e) representing the gripping operation of the gripping hand 100 in time series. The gripping operation of the gripping hand 100 proceeds in an order of the states (a) to (e).

The gripping hand 100 has the first finger 400 and the second finger 401, and simultaneously grips three samples 105 (105a, 105b, and 105c). It is assumed that the first finger 400 is located at a position contactable with the sample 105a, the second finger 401 is located at a position contactable with the sample 105c, and the sample 105b is located between the sample 105a and the sample 105c.

The first finger 400 has three recess sections 404 and a rotation portion 602 at positions facing the second finger 401. The first finger 400 has one recess section 404 on the tip end side, and includes the rotation portion 602 on the base portion side relative to this recess section 404. The rotation portion 602 has two recess sections 404 along the longitudinal direction of the first finger 400 at positions facing the second finger 401. That is, the first finger 400 has three recess sections 404 along the longitudinal direction of the finger.

The rotation portion 602 is a part of the first finger 400 and is rotatably connected to the first finger 400. The rotation portion 602 has one end on the tip end side of the first finger 400 and has another end on the base portion side of the first finger 400. The one end of the rotation portion 602 is connected to the first finger 400. The rotation portion 602 is rotatable about the one end that is a connection portion thereof such that the other end approaches the first finger 400 or separates from the first finger 400. That is, the rotation portion 602 is rotatable such that the two recess sections 404 of the rotation portion 602 face a flat surface where the samples 105 are located or face the second finger 401. When the gripping hand 100 does not perform the gripping operation, the rotation portion 602 has such a posture that the two recess sections 404 face the flat surface where the samples 105 are located (a position in a rotation direction).

The second finger 401 has the oblique surface 405 along the longitudinal direction of the finger at a position facing the first finger 400. The oblique surface 405 has a shape moving away from the first finger 400 as the oblique surface 405 extends from the tip end toward the base portion of the second finger 401.

The state (a) in FIG. 6A shows a state in which the gripping hand 100 simultaneously grips three samples 105a, 105b, and 105c on a flat surface, the first finger 400 and the second finger 401 are closed, the first finger 400 is in contact with one sample 105a, and the second finger 401 is in contact with another one sample 105c. A part of the sample 105a enters the recess section 404 on the most tip end side of the first finger 400 among the three recess sections 404. In the rotation portion 602, two recess sections 404 face the flat surface where the samples 105 are located.

The state (b) in FIG. 6A shows a state in which the first finger 400 and the second finger 401 are further closed, and the sample 105c moves toward the base portion of the second finger 401 along the oblique surface 405 of the second finger 401. The sample 105c moves toward the base portion of the second finger 401 due to the gripping force of the gripping hand 100 and the oblique surface 405 of the second finger 401. Upon coming into contact with the second finger 401, the rotation portion 602 rotates about the connection portion with the first finger 400 from an orientation where the two recess sections 404 face the flat surface where the samples 105 are located to an orientation where the two recess sections 404 face the second finger 401.

In the state (c) in FIG. 6A, the first finger 400 and the second finger 401 are further closed from the state (b), the sample 105c further moves along the oblique surface 405 of the second finger 401, and the second finger 401 is in contact with another one more sample 105b. The rotation portion 602 further rotates to an orientation where the two recess sections 404 face the second finger 401 due to the gripping force of the gripping hand 100 and a pressing force of the sample 105c. Since the sample 105c moves toward the base portion of the second finger 401 before the sample 105b, the gripping hand 100 can stably grip the sample 105c and the sample 105b.

The state (d) in FIG. 6A shows a state in which the first finger 400 and the second finger 401 are further closed from the state (c), the sample 105c further moves along the oblique surface 405 of the second finger 401, and the sample 105b moves toward the base portion of the second finger 401 along the oblique surface 405 of the second finger 401. The rotation portion 602 further rotates, and the two recess sections 404 face the second finger 401. The sample 105c is moved due to the gripping force of the gripping hand 100 and a pressing force of the sample 105b.

The state (e) in FIG. 6A shows a state in which the closing of the first finger 400 and the second finger 401 is completed, and the gripping operation of the gripping hand 100 is completed. When the first finger 400 and the second finger 401 are further closed from the state (d), the sample 105c and the sample 105b further move toward the base portion of the second finger 401 along the oblique surface 405 of the second finger 401. Then, a part of the sample 105c enters the recess section 404 on the other end side among the two recess sections 404 of the rotation portion 602, and a part of the sample 105b enters the recess section 404 on one end side among the two recess sections 404 of the rotation portion 602. That is, a part of the sample 105c enters the recess section 404 on the most base portion side among the three recess sections 404 of the first finger 400. A part of the sample 105b enters the recess section 404 in a central portion in the longitudinal direction of the finger among the three recess sections 404 of the first finger 400.

In this way, the gripping hand 100 can simultaneously grip the three samples 105 side by side along the longitudinal directions of the first finger 400 and the second finger 401. When the three samples 105 are gripped, a part thereof enters the recess section 404. Therefore, the gripping hand 100 can stably grip the three samples 105 simultaneously.

The first finger 400 may include an elastic member and may be connected to the rotation portion 602 by the elastic member. Hereinafter, a configuration in which the rotation portion 602 is connected to the first finger 400 by the elastic member will be described.

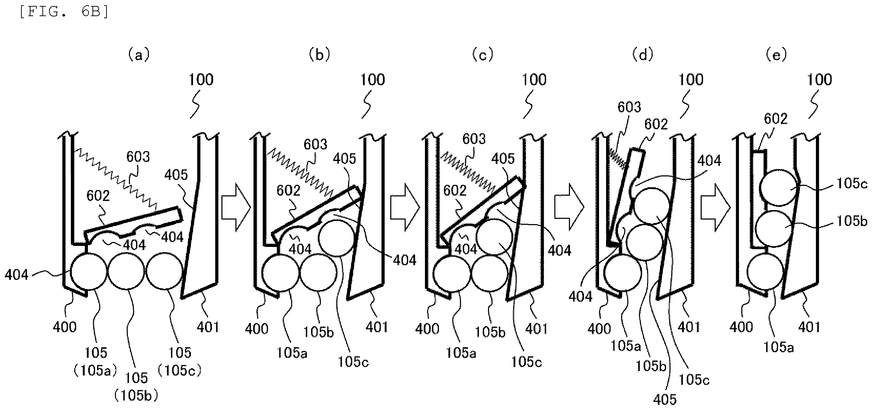

FIG. 6B shows an example of a configuration of the gripping hand 100 whose rotation portion 602 is connected to the first finger 400 by an elastic member 603. The gripping hand 100 shown in FIG. 6B has the same configuration as the gripping hand 100 shown in FIG. 6A, except that the elastic member 603 is provided. Therefore, only the elastic member 603 will be described below.

The elastic member 603 connects the other end of the rotation portion 602 and a portion of the first finger 400 on the base portion side, and may be implemented by a spring, for example. The rotation portion 602 receives, from the elastic member 603, a force that controls rotation about the one end (the connection portion with the first finger 400). The elastic member 603 contracts as the state shifts from the state (a) to the state (e) in FIG. 6B.

The elastic member 603 prevents the rotation portion 602 from rotating when the gripping hand 100 does not perform the gripping operation. The rotation of the rotation portion 602 is controlled by the elastic member 603, the sample 105c easily moves toward the base portion of the second finger 401 before the sample 105b, and thus the gripping hand 100 can stably grip the samples 105. Further, due to the elastic member 603, the gripping hand 100 can easily release the gripped samples 105 when the fingers open.

In the above description, the first finger 400 has the three recess sections 404. That is, the first finger 400 has one recess section 404 on the tip end side, and the rotation portion 602 has two recess sections 404. The number of the recess sections 404 of the first finger 400 may not be three. The first finger 400 may have two or more recess sections 404 on the tip end side. The rotation portion 602 may have one or three or more recess sections 404. However, in the configuration of the gripping hand 100 including the rotation portion 602 in the present embodiment, in order to more stably grip a plurality of samples 105 simultaneously, it is preferable that the first finger 400 has one recess section 404 on the tip end side and the rotation portion 602 has two recess sections 404.

In the sample sorting system according to the present embodiment, since the gripping hand 100 includes the rotation portion 602 having the recess section 404, more samples 105 can be stably gripped simultaneously.

### Third Embodiment

A sample sorting system according to a third embodiment of the present invention will be described. Hereinafter, the sample sorting system according to the present embodiment will be described focusing on differences from the sample sorting system according to the first embodiment. In the present embodiment, the gripping device 107 can simultaneously grip four samples 105 on a flat surface. Hereinafter, an example in which each object gripped by the gripping device 107 is the cylindrical sample 105 will be described.

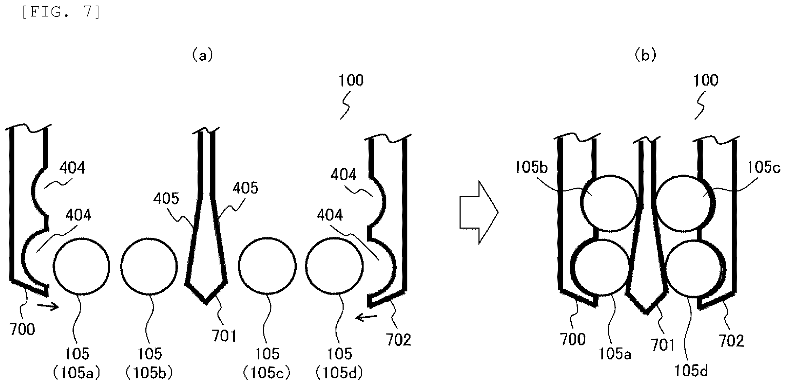

FIG. 7 shows an example of a configuration of the gripping hand 100 provided in the gripping device 107 in the present embodiment. FIG. 7 shows two states (a) and (b) representing the gripping operation of the gripping hand 100 in time series. The gripping operation of the gripping hand 100 proceeds in an order of the states (a) to (b).

The gripping hand 100 has a first finger 700, a second finger 701, and a third finger 702 as one set of fingers for gripping a plurality of cylindrical objects. The first finger 700 and the second finger 701 face each other. The second finger 701 and the third finger 702 face each other. The first finger 700 and the third finger 702 are located on outer sides in the opening and closing direction, are movable relative to the second finger 701, and move in the opening and closing direction when the gripping hand 100 performs the gripping operation. The second finger 701 is located between the first finger 700 and the third finger 702 in the opening and closing direction, and does not move in the opening and closing direction even when the gripping hand 100 performs the gripping operation.

In the present embodiment, the gripping hand 100 grips four samples 105 (105a, 105b, 105c, and 105d). It is assumed that the first finger 700 is located at a position contactable with the sample 105a, the second finger 701 is located at a position contactable with the sample 105b and the sample 105c, and the third finger 702 is located at a position contactable with the sample 105d.

Similarly to the first finger 400 in the first embodiment, the first finger 700 and the third finger 702 each have two recess sections 404 along the longitudinal directions of the fingers at positions facing the second finger 701.

The second finger 701 has oblique surfaces 405 along the longitudinal direction of the finger at a position facing the first finger 700 and a position facing the third finger 702. Each oblique surface 405 has the same shape as the oblique surface 405 of the second finger 401 in the first embodiment. That is, the oblique surface 405 at the position facing the first finger 700 has a shape moving away from the first finger 700 as the oblique surface 405 extends from a tip end to a base portion of the second finger 701, and the oblique surface 405 at the position facing the third finger 702 has a shape moving away from the third finger 702 as the oblique surface 405 extends from the tip end toward the base portion of the second finger 701.

The state (a) in FIG. 7 shows a state in which the gripping hand 100 starts closing the first finger 700 and the third finger 702 while simultaneously gripping the four samples 105a to 105d on a flat surface. The sample 105a and the sample 105b are located between the first finger 700 and the second finger 701, and the sample 105c and the sample 105d are located between the second finger 701 and the third finger 702.

When the first finger 700 and the third finger 702 are closed, the sample 105b and the sample 105c move toward the base portion of the second finger 701 along the oblique surfaces 405 of the second finger 701 as described in the first embodiment with reference to FIG. 4.

The state (b) in FIG. 7 shows a state in which the closing of the first finger 700 and the third finger 702 is completed, and the gripping operation of the gripping hand 100 is completed. A part of the sample 105a enters the recess section 404 on the tip end side of the first finger 700 among the two recess sections 404 of the first finger 700. A part of the sample 105b enters the recess section 404 on the base portion side of the first finger 700 among the two recess sections 404 of the first finger 700. A part of the sample 105c enters the recess section 404 on the base portion side of the third finger 702 among the two recess sections 404 of the third finger 702. A part of the sample 105d enters the recess section 404 on the tip end side of the third finger 702 among the two recess sections 404 of the third finger 702.

In this way, the gripping hand 100 can simultaneously grip the four samples 105 in pairs side by side along the longitudinal directions of the first finger 700 and the third finger 702. When the four samples 105 are gripped, a part thereof enters the recess section 404. Therefore, the gripping hand 100 can stably grip the four samples 105 simultaneously.

In the sample sorting system according to the present embodiment, the gripping hand 100 has three fingers (the first finger 700, the second finger 701, and the third finger 702) as one set of fingers, and can stably grip more samples 105 simultaneously.

### Fourth Embodiment

A sample sorting system according to a fourth embodiment of the present invention will be described. In the present embodiment, as described in the third embodiment (FIG. 7), the gripping hand 100 provided in the gripping device 107 has three fingers (the first finger 700, the second finger 701, and the third finger 702) as one set of fingers. Each of the first finger 700 and the third finger 702, which move in the opening and closing direction when the gripping hand 100 performs the gripping operation, includes the rotation portion 602 similarly to the first finger 400 described in the second embodiment (FIG. 6).

That is, the first finger 700 and the third finger 702 each have one recess section 404 on the tip end side of each of the fingers 700 and 702, respectively, and each include the rotation portion 602 at a position facing the second finger 701 on the base portion side of each of the fingers 700 and 702, respectively, relative to the recess section 404. The rotation portion 602 has a plurality of recess sections 404 along the longitudinal directions of the fingers 700 and 702, which include the rotation portions 602, at positions facing the second finger 701. One end of each rotation portion 602 is connected to the respective fingers 700 and 702 that include each rotation portion 602, and the rotation portion 602 is rotatable about the one end (a connection portion with the respective fingers 700 and 702) .

Similarly to the first finger 400 described in the second embodiment (FIG. 6), each of the first finger 700 and the third finger 702 may include the elastic member 603 and may be connected to the rotation portion 602 by the elastic member 603. The elastic member 603 provided at the first finger 700 connects another end of the rotation portion 602 provided at the first finger 700 to a portion of the first finger 700 on the base portion side. The elastic member 603 provided at the third finger 702 connects another end of the rotation portion 602 provided at the third finger 702 to a portion of the third finger 702 on the base portion side.

In the present embodiment, the gripping hand 100 can stably grip six or more samples 105 simultaneously. That is, in the sample sorting system according to the present embodiment, the gripping hand 100 can stably grip more samples 105 simultaneously.

### Fifth Embodiment

A sample sorting system according to a fifth embodiment of the present invention will be described. Hereinafter, the sample sorting system according to the present embodiment will be described focusing on differences from the sample sorting system according to the first embodiment. In the present embodiment, the gripping device 107 grips a plurality of spherical objects 805 as objects on a flat surface. Hereinafter, an example in which the gripping device 107 simultaneously grips two spherical objects 805 will be described.

FIG. 8 is a schematic diagram of the fingers of the gripping hand 100 of the sample sorting system according to the present embodiment as viewed from above the flat surface where the objects 805 are placed.

In the sample sorting system according to the present embodiment, the gripping hand 100 has four fingers 800 to 803 that form two sets of fingers for gripping the two spherical objects 805 (805a and 805b). Among the four fingers 800 to 803, the first finger 800 and the second finger 802 are one set of fingers, and the third finger 801 and the fourth finger 803 are another one set of fingers. The first finger 800 and the third finger 801 have the same configuration as that of the first finger 400 of the gripping hand 100 in the first embodiment (FIG. 4), and each have two recess sections 404. The second finger 802 and the fourth finger 803 have the same configuration as that of the second finger 401 of the gripping hand 100 in the first embodiment, and each have the oblique surface 405.

That is, in the present embodiment, the gripping hand 100 has the two sets of fingers, opens and closes the first finger 800 and the second finger 802, which are one set of fingers, opens and closes the third finger 801 and the fourth finger 803, which are the other one set of fingers, and thus simultaneously grips the two spherical objects 805. In the present embodiment, it is assumed that the first finger 800 and the third finger 801 are located at positions contactable with the object 805a, and the second finger 802 and the fourth finger 803 are located at positions contactable with the object 805b. In the sample sorting system according to the present embodiment, since the gripping hand 100 has the four fingers 800 to 803, the plurality of spherical objects 805 can be stably gripped simultaneously.

When the gripping hand 100 performs the gripping operation, a part of the object 805a enters the recess sections 404 on the tip end side of the first finger 800 and the third finger 801. The object 805b moves toward base portions of the second finger 802 and the fourth finger 803 along the oblique surfaces 405 of the second finger 802 and the fourth finger 803, and a part of the object 805b enters the recess sections 404 on the base portion side of the first finger 800 and the third finger 801.

In this way, the gripping hand 100 can simultaneously grip the two objects 805 side by side along longitudinal directions of the four fingers 800 to 803. When the two objects 805 are gripped, a part thereof enters the recess section 404. Therefore, the gripping hand 100 can stably grip the two objects 805 simultaneously.

On the gripping hand 100, positions of the first finger 800, the third finger 801, the second finger 802, and the fourth finger 803 can be determined as desired. Preferred positions of the four fingers 800 to 803 are, for example, positions where the first finger 800 and the third finger 801 are close to each other, the second finger 802 and the fourth finger 803 are close to each other, the first finger 800 faces the second finger 802, and the third finger 801 faces the fourth finger 803 (for example, FIG. 8). When the four fingers 800 to 803 are at such positions, and the gripping hand 100 performs the gripping operation, the four fingers 800 to 803 can be located at positions close to a straight line connecting centers of the two objects 805 to be gripped, and the two spherical objects 805 can be stably gripped simultaneously by the set of the first finger 800 and the second finger 802 and the set of the third finger 801 and the fourth finger 803.

The gripping hand 100 may have the first finger 800 and the third finger 801 as one finger group, and the second finger 802 and the fourth finger 803 as another one finger group.

FIG. 9 is a schematic diagram of a configuration in which the gripping hand 100 includes two finger groups 900 and 901 in the sample sorting system according to the present embodiment as viewed from above a flat surface where the objects 805 are placed. The finger group 900 includes the first finger 800 and the third finger 801 shown in FIG. 8. The finger group 901 includes the second finger 802 and the fourth finger 803 shown in FIG. 8.

In the sample sorting system according to the present embodiment, when the gripping hand 100 includes such two finger groups 900 and 901, the two spherical objects 805 can still be stably gripped simultaneously.

The invention is not limited to the above-described embodiments and may include various modifications. For example, the embodiments have been described in detail to facilitate understanding of the present invention, and the present invention is not necessarily limited to those including all configurations described above. A part of configurations of one embodiment can be replaced with a configuration of another embodiment. A configuration of another embodiment can be added to a configuration of one embodiment. A part of a configuration in each embodiment may be deleted, or may be added with or replaced with another configuration.

### Reference Signs List

- 100: gripping hand
- 101: object information acquisition device
- 102: manipulator
- 103: robot controller
- 104: control device
- 105, 105a, 105b, 105c, 105d: sample
- 106: sample rack
- 107: gripping device
- 200: processor
- 201: main storage device
- 202: secondary storage device
- 203: network interface
- 204: input and output interface
- 400: first finger
- 401: second finger
- 404: recess section
- 405: oblique surface
- 602: rotation portion
- 603: elastic member
- 700: first finger
- 701: second finger
- 702: third finger
- 800: first finger
- 801: third finger
- 802: second finger
- 803: fourth finger
- 805, 805a, 805b: object
- 900, 901: finger group

## Claims

1. A sample sorting system comprising:
a gripping device including a gripping hand; and
a control device configured to control the gripping device, wherein
the gripping hand has a plurality of fingers including a first finger and a second finger, and grips a plurality of objects with the plurality of fingers,
the first finger has a plurality of recess sections along a longitudinal direction of the first finger at positions facing the second finger, and
the second finger has an oblique surface along a longitudinal direction of the second finger at a position facing the first finger.

2. The sample sorting system according to claim 1, wherein
when the gripping hand grips the plurality of objects, a part of the objects enters the recess sections, and the plurality of objects are gripped side by side in the longitudinal directions of the first finger and the second finger.

3. The sample sorting system according to claim 2, wherein
the plurality of objects are a plurality of samples disposed on a sample rack, and
an interval between the recess sections of the first finger is equal to an interval between the samples disposed adjacent to each other on the sample rack.

4. The sample sorting system according to claim 1, wherein
the first finger has one of the recess sections on a tip end side of the first finger, and includes a rotation portion at a position facing the second finger on a base portion side of the first finger relative to the one of the recess sections,
the rotation portion has a plurality of the recess sections along the longitudinal direction of the first finger at positions facing the second finger, and
the rotation portion has one end on the tip end side, is connected to the first finger at the one end, and is rotatable about the one end.

5. The sample sorting system according to claim 4, wherein
the first finger includes an elastic member,
the rotation portion has another end on the base portion side, and
the elastic member connects the another end of the rotation portion and a portion of the first finger on the base portion side.

6. The sample sorting system according to claim 1, wherein
the gripping hand has the first finger, the second finger, and a third finger as the plurality of fingers,
the second finger is located between the first finger and the third finger,
the second finger has the oblique surface along the longitudinal direction of the second finger at each of a position facing the first finger and a position facing the third finger, and
the third finger has a plurality of the recess sections along a longitudinal direction of the third finger at positions facing the second finger.

7. The sample sorting system according to claim 6, wherein
each of the first finger and the third finger has one of the recess sections on a tip end side, and includes a rotation portion at a position facing the second finger on a base portion side relative to the one of the recess sections,
the rotation portion has a plurality of the recess sections along the longitudinal direction of the respective fingers including the rotation portion at positions facing the second finger, and
the rotation portion has one end on the tip end side, is connected to the respective fingers including the rotation portion at the one end, and is rotatable about the one end.

8. The sample sorting system according to claim 7, wherein
each of the first finger and the third finger includes an elastic member,
the rotation portion has another end on the base portion side,
the elastic member of the first finger connects the another end of the rotation portion of the first finger and a portion of the first finger on the base portion side, and
the elastic member of the third finger connects the another end of the rotation portion of the third finger and a portion of the third finger on the base portion side.

9. The sample sorting system according to claim 1, wherein
the recess section has an arc shape or a shape formed of a plurality of flat surfaces.

10. The sample sorting system according to claim 1, wherein
the oblique surface is a flat surface or a curved surface.

11. The sample sorting system according to claim 1, wherein
the gripping hand has the first finger, the second finger, a third finger, and a fourth finger as the plurality of fingers,
the third finger has a plurality of the recess sections along a longitudinal direction of the third finger at positions facing the fourth finger, and
the fourth finger has the oblique surface along a longitudinal direction of the fourth finger at a position facing the third finger.
